# DEMANDE DE BREVET EUROPEEN

(11) **EP 2 711 952 A1**
(43) Date de publication de la demande: **26.03.2014**
(21) Numéro de dépôt: 13305971.7
(22) Date de dépôt: 08.07.2013
(51) Int. Cl.: H01H 9/16, G08B 5/36

(54) **Affichage économe en énergie de l'état du module domotique**

(30) Priorité: 02.08.2012 FR 1257555
(71) Demandeur: HAGER CONTROLS (Société par Actions Simplifiée), 67700 Saverne (FR)
(72) Inventeur: Paillard, Jean Noël, 67190 Mutzig (FR)
(74) Mandataire: Nuss, Laurent

(57) **Abrégé**

La présente invention a pour objet un procédé de pilotage d'un appareil de contrôle domotique, communicant avec un réseau d'information grâce à un point de connexion qu'il comprend, présentant à son tour des sorties qu'il contrôle et piloté en fonction de signaux d'entrée
ledit appareil comprenant une unité de traitement ainsi qu'un ensemble d'indicateurs visuels associé chacun à un paramètre de fonctionnement de l'appareil de contrôle, à savoir un signal d'entrée ou à une sortie, et dont l'aspect est associé à un état de ce paramètre,
la mise en marche de chaque indicateur correspondant à un état prédéfini du paramètre associé.

Ce procédé est caractérisé en ce que
il comprend un premier mode, dans lequel les états des indicateurs visuels sont contrôlés de sorte qu'un indicateur visuel n'est pas mis en marche en permanence sur toute la période lors de laquelle l'état prédéfini se manifeste pour le paramètre associé.

Application aux équipements domotiques.

## Description

La présente invention relève du domaine des équipements pour installation domotique, et a pour objet un procédé de pilotage particulier d'un appareil de contrôle domotique.

Une installation domotique repose sur un réseau d'information, généralement filaire électrique, comme par exemple un réseau bus au standard EIB, mettant en communication un ensemble d'équipements, qui peuvent être des actionneurs, comme des volets roulants, des luminaires, des capteurs, comme des capteurs de luminosité, des détecteurs de présence, ou autres.

Une telle installation comprend aussi des appareils de contrôle domotique, qui peuvent piloter, sous forme de sortie, l'état de circuits électriques de puissance, dans lesquels sont placés les consommateurs électriques. Ils peuvent réceptionner des instructions grâce au réseau d'information, grâce à une télécommande, ou encore grâce à un ordre local par le biais d'un bouton poussoir, par exemple. De tels appareils sont par exemple décrits dans FR 2 873 501. Ils sont munis d'un organe appelé point de connexion, permettant la connexion au réseau d'information, pour y émettre et réception du signal et éventuellement aussi en tirer de l'énergie électrique. L'état des sorties est généralement piloté à l'aide de relais. Un tel appareil de contrôle domotique permet donc de piloter l'état d'au moins une sortie dans laquelle se trouve un consommateur électrique, ce pilotage se faisant à l'aide d'une logique appliquée à des signaux d'entrée, qui peuvent provenir, comme il a été mentionné plus haut, de capteurs situés ailleurs dans le réseau d'information. Les appareils de contrôle domotique peuvent aussi, en sortie, générer du signal.

Un appareil de contrôle domotique est en outre généralement muni d'indicateurs visuels, associés chacun à un paramètre de fonctionnement dudit appareil : une sortie ou un signal d'entrée. L'indication permet ainsi de rendre compte de l'état du paramètre, par exemple de la façon suivante, pour des utilisations binaires :
- l'indicateur est allumé dès lors que la sortie qui lui est associée est active, donc en fonctionnement permettant la mise en marche des consommateurs qui y sont reliés, et éteint si la sortie qui lui est associée est inactive, les consommateurs reliés étant donc arrêtés ;
- l'indicateur est allumé dès lors que le signal d'entrée qui lui est associé est actif, comme par exemple si un ordre de mise en marche ou si un signal particulier est reçu, et éteint dès lors que le signal d'entrée associé est inactif, comme en cas d'absence d'ordre.

L'utilisation de diodes pour représenter de façon synchronisée et en permanence l'état des entrées et sorties d'un module bus est divulgué par exemple dans EP 0296 022, DE 297 12 043, et US 6 234 063.

Le recours à des indicateurs sous la forme de curseurs est peu avantageux car il ne permet pas tout le panel fonctionnel d'une indication lumineuse : allumage en continu ou par intermittence, variables temporelles de l'intermittence, couleurs, dégradé, etc.

Un tel appareil de contrôle domotique tire toutefois généralement du réseau d'information bus lui-même l'énergie électrique dont il a besoin pour son fonctionnement. Il est donc important, pour éviter de troubler le fonctionnement du bus, de réduire la consommation électrique totale de l'appareil de contrôle domotique, et notamment la consommation des indicateurs lumineux, qui nécessitent une alimentation électrique. Une consommation électrique élevée nécessite aussi des composants plus onéreux pour réaliser le bloc d'alimentation de l'appareil de contrôle.

La présente invention a pour but de pallier une partie et préférentiellement tous ces inconvénients et vise en particulier à réduire l'énergie électrique nécessaire à l'appareil de contrôle domotique, et en particulier aux indicateurs lumineux.

Cet objectif est atteint par la prévision, dans le programme de gestion de l'appareil de contrôle domotique, de périodes au cours desquels l'indicateur n'est pas mis en marche, bien que le paramètre qui lui est associé se trouve dans l'état correspondant normalement à la mise en marche de l'indicateur.

Ainsi, l'invention a pour objet un procédé de pilotage d'un appareil de contrôle domotique, communicant avec un réseau d'information bus grâce à un point de connexion qu'il comprend, présentant à son tour des sorties qu'il contrôle et piloté en fonction de signaux d'entrée
ledit appareil de contrôle 1 comprenant une unité de traitement ainsi qu'un ensemble d'indicateurs visuels associés chacun à un paramètre de fonctionnement de l'appareil de contrôle, à savoir à un signal d'entrée ou à une sortie, et dont l'aspect est associé à un état de ce paramètre,
la mise en marche de chaque indicateur correspondant à un état prédéfini du paramètre associé.

Ce procédé est **caractérisé en ce que**
il comprend un premier mode, dans lequel les états des indicateurs visuels sont contrôlés de sorte qu'un indicateur visuel n'est pas mis en marche en permanence sur toute la période lors de laquelle l'état prédéfini se manifeste pour le paramètre associé.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

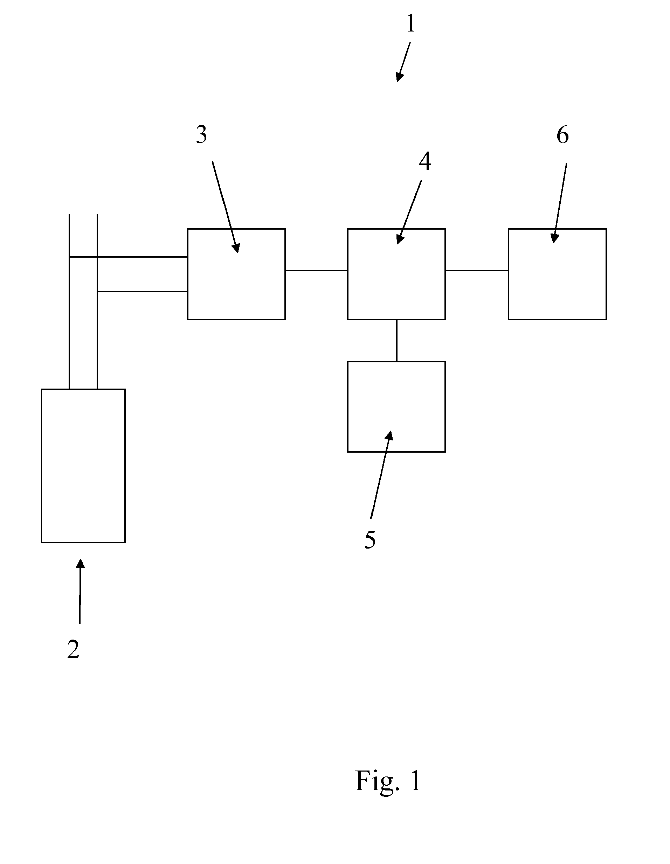

- la figure 1 schématise les composants essentiels d'un appareil de contrôle domotique ;
- la figure 2 montre l'évolution dans le temps d'un paramètre ainsi que l'indicateur qui lui est associé, et ce pour l'art antérieur ainsi que pour l'invention ;
- la figure 3 illustre le procédé selon un mode de réalisation de l'invention.

L'invention a donc pour objet un procédé de pilotage 100 d'un appareil de contrôle 1 domotique, communicant avec un réseau 2 d'information bus grâce à un point de connexion 3 qu'il comprend, présentant à son tour des sorties qu'il contrôle et piloté en fonction de signaux d'entrée
ledit appareil de contrôle 1 comprenant une unité de traitement 4 ainsi qu'un ensemble d'indicateurs visuels associés chacun à un paramètre de fonctionnement de l'appareil de contrôle 1, à savoir à un signal d'entrée ou à une sortie, et dont l'aspect est associé à un état de ce paramètre,
la mise en marche de chaque indicateur correspondant à un état prédéfini du paramètre associé.

Un tel appareil de contrôle 1 domotique fait donc partie d'un réseau 2 d'information, grâce auquel il communique avec les autres appareils qui sont branchés, comme lui, dans ce réseau 2. La communication est préférentiellement filaire, l'appareil de contrôle 1 domotique étant donc connecté avec, par exemple un câblage pour bus EIB, ou encore sans fil. Le branchement dans le réseau 2 se fait grâce à un point de connexion 3 que comprend l'appareil et qui permet la connexion et l'interface avec le réseau 2. C'est lui qui réceptionne le signal circulant sur le réseau 2 ou y envoi un signal. Il peut aussi permettre de puiser sur les lignes bus, l'énergie nécessaire au fonctionnement de l'appareil de contrôle 1 domotique.

L'appareil de contrôle 1 domotique a donc des sorties, qui peuvent être des sorties de puissance, dans lesquelles circulent des intensités de puissance, comme supérieures à une dizaine d'ampères, ou qui peuvent aussi être des sorties véhiculant des courants beaucoup plus faibles, notamment pour des applications de communications ou de recirculation d'information. L'appareil de contrôle 1 domotique contrôle l'état électrique de ces sorties, généralement à l'aide d'un relais les rendant passantes ou non, les sorties étant donc binaires. Un contrôle plus élaboré est bien entendu envisageable : gradation, répétition, envoi d'un signal codé, etc.

Dans l'exemple illustré ci-dessous, les sorties de l'appareil permettent le pilotage de consommateurs électriques comme de volets roulants, radiateurs électriques ou autre, en particulier des sorties binaires, et donc, soit actives, c'est-à-dire électriquement passantes, ou inactives, c'est-à-dire électriquement non passantes. Des sorties binaires peuvent être envisagées pour des intensités de puissance ou des intensités d'information. Les sorties alimentent généralement directement un applicatif 6, qui peut donc être un moteur électrique pour store, par exemple.

Le contrôle des sorties se fait en fonction de signaux d'entrées, notamment binaires, et donc actifs ou inactifs, par exemple générés par une horloge, une séquence programmée, un bouton poussoir, une action locale sur l'appareil, un signal sur le réseau 2 d'information bus, une télécommande ou autre. Un signal d'entrée peut être considéré actif dès lors qu'il signale la présence d'un phénomène qu'il représente, du vent, du soleil, une présence, un mouvement, une température au-delà d'un seuil, etc., ou encore dès lors qu'il représente une instruction de mise en marche, comme pour un ordre émis par une télécommande ou circulant directement sur le réseau 2. Les sorties permettent donc notamment de piloter des l'applicatif 6 ou de renvoyer de l'information.

L'appareil de contrôle 1 comprend aussi une unité de traitement 4 qui peut être un processeur numérique, les indicateurs visuels étant préférentiellement des indicateurs lumineux du type LED, bien que le recours à un principe d'indication plus élaboré puisse être envisagé : diodes de couleur différente en fonction du signal à renvoyer, écran d'affichage alphanumérique, ou d'image, etc.

Les indicateurs visuels, regroupés en une fonction d'interface homme machine 5 sont nécessaires pour représenter l'état d'un signal d'entrée ou d'une sortie, ce qui est conjointement nommé dans le texte ci-dessous comme l'état d'un paramètre, ce paramètre représentant donc le fonctionnement de l'appareil, soit en termes de données d'entrée pour son fonctionnement, soit en termes de sorties qu'il produit compte tenu d'une logique de raisonnement appliquée aux données d'entrées.

Les indicateurs lumineux, diodes, etc., sont classiquement montés directement comme des pièces composant l'appareil de contrôle 1. Il peut s'agir de diodes électroluminescentes. L'appareil de contrôle 1 peut, lui, prendre la forme d'un équipement modulaire monobloc, pour un montage dans un tableau électrique, mais aussi pour un montage encastré ou en saillie contre une paroi.

Ainsi, dans un mode de fonctionnement normal de l'appareil de contrôle 1, l'aspect d'un indicateur lumineux correspond à l'état du paramètre auquel cet indicateur est associé. Dans le cas d'entrées et de sorties binaires, et d'indicateurs lumineux sous la forme de diodes, l'état allumé d'un indicateur lumineux peut ainsi normalement signifier qu'il est actif, et ce qu'il s'agisse d'une entrée ou d'une sortie. L'état inactif correspond alors normalement à l'état éteint de l'indicateur lumineux. La mise en marche, notamment en continu ou par intermittence, d'un indicateur correspond donc normalement à un état prédéfini du paramètre associé, à savoir un état actif du paramètre, entrée ou sortie, ou inactif. D'autres associations sont possibles, mais celle-ci permet en particulier d'être relativement intuitive pour une personne qui consulte le tableau.

Selon l'invention, le procédé comprend un premier mode 101, dans lequel les états des indicateurs visuels sont contrôlés de sorte qu'un indicateur visuel n'est pas mis en marche en permanence sur toute la période lors de laquelle l'état prédéfini se manifeste pour le paramètre associé.

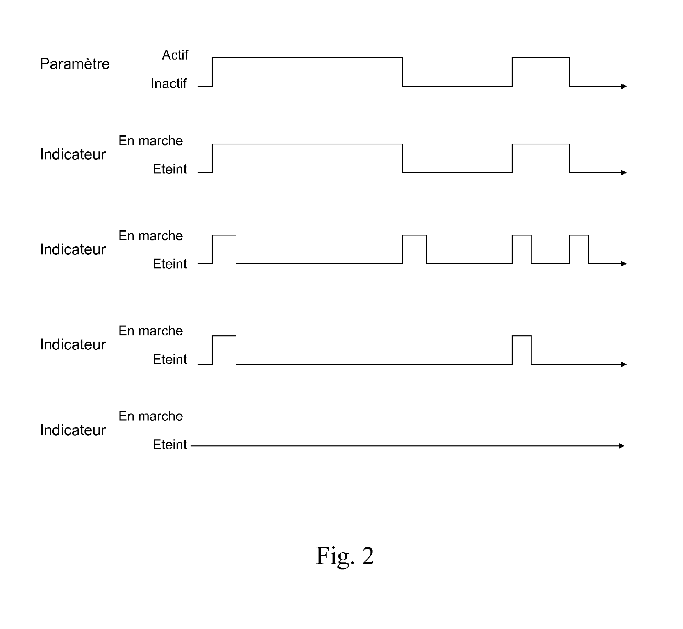

Le premier chronogramme de la figure 2 montre une évolution dans le temps d'un paramètre, soit une entrée, soit une sortie, entre un état actif et un état inactif. Le deuxième chronogramme montre une évolution dans le temps de l'état de l'indicateur correspondant, entre actif et inactif, l'état de l'indicateur étant synchronisé avec celui du paramètre. Cette gestion de l'affichage se retrouve dans le cadre du deuxième mode qui sera décrit plus loin, mais aussi dans le cas classique de l'art antérieur, où l'aspect de l'indicateur représente en permanence et de façon synchronisée l'état du paramètre associé. Les trois derniers chronogrammes montrent l'évolution de l'indicateur associé au paramètre du premier chronogramme, et ce dans des réalisations chaque fois différentes du premier mode.

Ainsi, à titre d'exemple, si l'état éclairé de l'indicateur lumineux est normalement associé à l'état actif de son paramètre, entrée ou sortie, l'invention propose de ne pas maintenir l'indicateur éclairé pendant tout le temps où le paramètre est actif. La même logique s'applique pour des associations plus complexes :
- l'indicateur est clignotant si le paramètre est actif : il ne sera pas clignotant lors de toute la période où le paramètre est inactif ;
- l'indicateur est mis en marche si le paramètre est inactif : il ne sera pas mis en marche sur toute la période où le paramètre est inactif.

Comme il a déjà été dit plus haut, l'allumage, ou mise en marche, de l'indicateur correspond généralement normalement à l'état actif du paramètre associé.

Il est ainsi possible de réduire considérablement la durée de mise en marche des indicateurs lumineux, ce qui contribue à réduire la dépense énergétique.

Selon une caractéristique additionnelle possible, dans le premier mode 101, l'indicateur visuel est mis en marche, pendant un temps prédéfini uniquement après un changement de l'état du paramètre associé audit indicateur, en particulier lors du passage de l'état inactif à l'état actif. Là encore, la mise en marche de l'indicateur visuel peut bien entendu correspondre à un éclairement en continu ou par intermittence. Ainsi, plutôt que de signaler de façon synchronisée l'état actif du paramètre, l'appareil indique momentanément que le paramètre est passé d'un état à un autre, préférentiellement d'un état inactif ou inactif à un état actif. Après une durée de mise en marche prédéfinie, l'indicateur lumineux est éteint, ce qui permet donc bien de limiter la consommation électrique.

Dans certains modes de réalisation, le temps prédéfini pour la mise en marche d'un indicateur après le changement d'état du paramètre correspondant est réglable, ce qui peut être réalisé par tout moyen de réglage : bouton pivotant, un ordre de télécommande, paramètre logiciel, informations bus, etc.

Le troisième chronogramme de la figure 2 illustre une mise en marche en cas de changement d'état, indifféremment des deux changements d'état possibles pour un paramètre binaire, actif puis inactif ou l'inverse ; le quatrième chronogramme de la figure 2 illustre une mise en marche temporaire uniquement en cas de passage de l'état inactif à l'état actif.

Comme les indicateurs lumineux sont allumés moins longtemps que dans un fonctionnement normal, ou selon un deuxième mode 102 encore décrit plus loin, la consommation est réduite grâce à ce premier mode 101.

Selon une caractéristique additionnelle possible, dans le premier mode 101, un indicateur visuel n'est pas mis en marche, indépendamment de l'état du paramètre associé, ceux-ci pouvant donc être éteints en permanence, ou uniquement clignotant lors de la période où le paramètre est actif, etc. Ainsi, lorsque ce premier mode 101 est utilisé, l'aspect des indicateurs visuels n'est plus représentatif de l'état du paramètre associé. Que le paramètre associé à cet indicateur soit actif ou inactif, l'indicateur n'est pas mis en marche, ce qui permet bien évidemment de limiter davantage la consommation électrique. Le cinquième chronogramme de la figure 2 illustre ce mode de réalisation.

La gestion des indicateurs selon un tel premier mode 101 n'est préférentiellement qu'une alternative possible à un mode de fonctionnement normal de ces indicateurs, dans lequel leur mise en marche correspond bien à l'état prédéfini correspondant du paramètre associé. Comme il sera encore décrit plus loin, le procédé de pilotage 100 présente alors un mode normal, dans lequel les indicateurs sont effectivement utilisés pour représenter directement et constamment l'état des paramètres qui leur sont associés, ainsi qu'un mode économe en énergie, premier mode 101, dans lequel les indicateurs sont par exemple uniquement momentanément mis en marche, voire carrément éteints en permanence.

Selon une autre caractéristique additionnelle possible du procédé 100, l'unité de traitement 4 est placée dans un mode de veille, puis, en cas de stimulation prédéfinie, est replacée dans son mode de fonctionnement normal, cette mise en veille pouvant avoir lieu en particulier lorsque le premier mode 101 est en cours d'utilisation. L'unité de traitement 4 de l'appareil de contrôle 1, lorsqu'il s'agit d'un processeur numérique, est mis en veille par une réduction de la fréquence de calcul, ce qui permet de réduire davantage la consommation d'énergie. Bien entendu, le passage à un mode de veille, donc altéré par rapport à ses capacités fonctionnelles normales, se fait seulement après une période d'inactivité de l'appareil de contrôle 1, ce qui peut être une absence de signal sur le bus d'information, absence de sollicitation locale directement sur l'appareil de contrôle 1, etc.

Une stimulation prédéfinie de l'appareil de contrôle 1 ayant pour effet de faire sortir l'unité de traitement 4 de son mode de veille, peut être, par exemple :
- la sortie du premier mode 101 vers un mode dans lequel les économies d'énergie ne sont pas une priorité, ce qui est le cas du deuxième mode 102 décrit plus loin, les causes possibles de ce changement de mode sont par ailleurs elles aussi décrites plus loin ;
- le changement de l'état d'une sortie suite à une action locale, au niveau de l'appareil de contrôle 1 lui-même ;
- évènement sur le bus ou évènement cyclique ;
- sollicitation de l'application 6 en aval de l'appareil de contrôle 1 ;
- la circulation d'une information dans le réseau 2 d'information bus, cette information étant éventuellement spécifiquement destinée à l'appareil de contrôle 1 ;
- la détection d'une présence à proximité de l'appareil de contrôle 1, signe d'une utilisation imminente et donc de la nécessité de remettre l'unité de traitement 4 dans un état pleinement fonctionnel.

A cet effet, l'appareil de contrôle 1 peut être muni d'un détecteur de présence et/ou mouvement.

Selon une autre caractéristique additionnelle possible du procédé, le point de connexion 3 est placé dans un mode de veille, puis, en cas de stimulation prédéfinie, replacé dans un mode de fonctionnement normal. La stimulation prédéfinie peut être l'une de celles décrites pour la stimulation de l'unité de traitement 4, et en particulier la réception d'une information circulant sur le réseau 2 bus, et qui est spécifiquement adressée à l'appareil de contrôle 1. Là encore, cette mise en veille du point de connexion 3 s'effectue préférentiellement lorsque l'appareil de contrôle 1 est piloté conformément au premier mode 101, et avant ou après mise en veille de l'unité de traitement 4.

Ainsi, dans des modes de réalisation particuliers, le point de connexion 3 est replacé dans son mode de fonctionnement normal en cas d'information circulant dans le réseau 2 d'information, notamment adressée spécifiquement audit point de connexion 3 et/ou à l'appareil de contrôle 1 ou une autre information, qui n'est pas spécifiquement adressée à l'appareil de contrôle 1, comme, par exemple, un signal représentant une détection de présence dans une certaine zone de l'habitation ou à proximité de l'appareil de contrôle 1.

Selon une caractéristique additionnelle possible du procédé, il comprend, en outre, un deuxième mode 102, dans lequel un indicateur est mis en marche en permanence sur toute la période lors de laquelle l'état prédéfini se manifeste pour le paramètre associé, l'état des sorties étant piloté par une action locale de l'utilisateur sur l'appareil de contrôle 1 et/ou par une information circulant sur le réseau 2 d'information. Le deuxième chronogramme de la figure 2 illustre le fonctionnement d'un indicateur dans le deuxième mode 102. Le deuxième mode 102 forme donc le mode de fonctionnement le plus complet, mais donc aussi celui qui nécessite le plus d'énergie électrique. Dans ce deuxième mode 102, il n'est donc pas forcément prévu que l'unité de traitement 4 passe dans un mode de veille en cas d'absence de sollicitation. Par rapport au deuxième mode 102, le premier mode 101 forme donc un mode de gestion de l'appareil de contrôle 1 où la consommation électrique est réduite, grâce à une meilleure gestion des indicateurs lumineux, mais aussi éventuellement grâce à la mise en veille de plusieurs de ses composants électroniques : unité de traitement 4, point de connexion 3.

Dans ce deuxième mode 102, l'utilisateur peut donc agir localement sur l'appareil de contrôle 1 de façon manuelle, à l'aide de boutons poussoirs qu'il contient, pour forcer l'état des entrées ou sorties, les informations circulant sur le bus du réseau 2 d'information pouvant alors n'avoir aucun effet sur l'appareil de contrôle 1, ce dernier étant donc uniquement piloté par des actions locales. Dans le premier mode 101, une telle action locale peut être sans effet, l'appareil de contrôle 1 fonctionnant donc entièrement de façon autonome, et seule la permutation vers le deuxième mode 102 permettra à l'utilisateur de forcer le fonctionnement de l'appareil de contrôle 1 comme il le souhaite. Dans ce fonctionnement manuel, il est donc utile d'avoir une représentation visuelle permanente de l'état du paramètre d'entrée ou de sortie. A terme, un appareil de contrôle 1 domotique se trouve dans un fonctionnement automatique, exclusivement piloté par le réseau 2, et le premier mode 101, où l'affichage est moins précis car moins synchronisé, peut être utilisé.

Dans le premier mode 101 comme dans le deuxième mode 102, il peut donc être envisagé que seule l'une des façons de piloter l'appareil de contrôle 1 soit possible : action locale ou information sur le réseau 2 bus.

Selon une caractéristique additionnelle possible, le procédé peut commuter du premier mode 101 au deuxième mode 102 et inversement, notamment en cas d'action locale de l'utilisateur sur l'appareil de contrôle 1, en cas de réception d'une instruction provenant du réseau 2 d'information, cette instruction pouvant être générale à tous les équipements du réseau 2 bus, dédiée à une famille de produits, ou à un unique produit particulier, en cas de détection de présence et/ou mouvement à proximité de l'appareil de contrôle 1 grâce à un détecteur de mouvement et/ou présence qu'il comprend ou présent ailleurs dans le même tableau électrique que celui qui accueille l'appareil de contrôle 1 domotique, ou encore en cas de commutation grâce à un bouton que présente l'appareil de contrôle 1.

Le passage du premier mode 101, plutôt associé à un fonctionnement autonome et sans possibilité d'action locale, au deuxième mode 102, plutôt associé à un fonctionnement manuel, sans possibilité d'action avec des informations provenant du bus, peut avoir pour effet de sortir l'unité de traitement 4 de son mode de veille et de la placer dans son mode de fonctionnement normal, lorsque, comme il a été décrit plus, cette dernière est placée dans un mode de veille suite à une période d'inactivité trop longue.

Les possibilités de fonctionnement de l'appareil de contrôle 1 peuvent donc être, entre autres :
- un fonctionnement piloté uniquement par action locale au niveau de l'appareil de contrôle 1 et insensible aux informations circulant sur le réseau 2 d'information bus. L'affichage peut être géré avec le premier mode 101 ou le deuxième mode 102, ce deuxième étant toutefois moins économe en énergie que le premier. Le passage du deuxième mode 102 vers le premier mode 101 est déclenché, par exemple, par le changement de l'état d'une sortie suite à une action locale ou suite à la détection d'une présence ;
- un fonctionnement autonome, piloté uniquement par les informations circulant sur le réseau 2 d'information bus, l'affichage des indicateurs lumineux étant géré conformément au deuxième mode 102, c'est-à-dire sans économie d'énergie particulière ;

- un fonctionnement autonome, piloté uniquement par les informations circulant sur le réseau 2 d'informations bus, l'affichage des indicateurs étant géré soit conformément au premier mode 101, soit conformément au deuxième mode 102. Le passage entre les deux modes peut être provoqué par les mêmes événements que précédemment ;
- dans ces divers fonctionnements, il est toujours possible que le point de connexion 3 et/ou l'unité de traitement 4 soit aussi mis dans un mode de veille et revienne à un fonctionnement normal par exemple en cas d'évènement tel qu'envisagé ci-dessus.

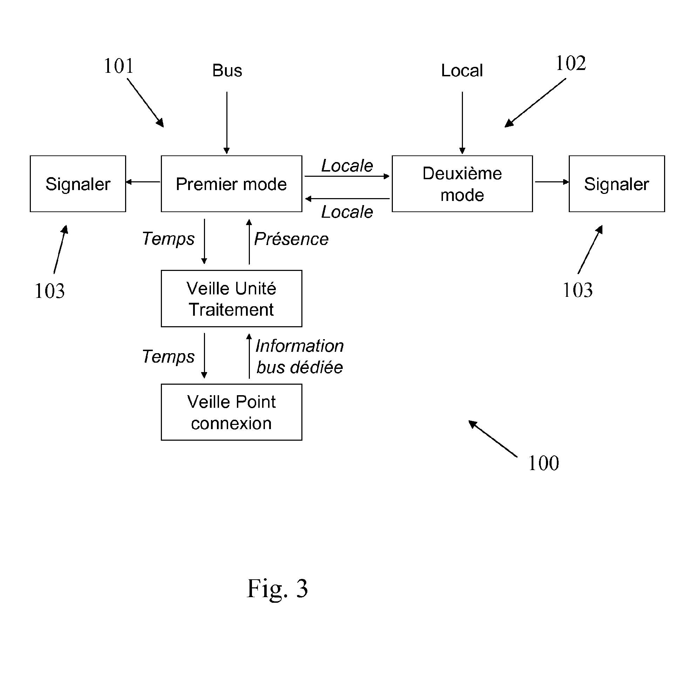

Enfin, selon une caractéristique additionnelle possible du procédé, il comprend une étape consistant à afficher 103 le mode de fonctionnement en cours, notamment par l'envoi d'une information sur le réseau 2 d'information ou encore au niveau de l'appareil de contrôle 1 lui-même par l'état d'un curseur ou d'un indicateur visuel. La figure 3 illustre une réalisation particulière du procédé de pilotage 100. Il comprend un premier mode 101, économe en énergie, et un deuxième mode 102, le passage de l'un à l'autre se faisant par action locale sur des boutons poussoirs dont est muni d'appareil de contrôle 1 domotique. Le procédé affiche 103 le mode de fonctionnement en cours, que ce soit pour le premier mode 102 ou pour le deuxième mode 102. Le premier mode 101 étant essentiellement associé à un fonctionnement en autonomie, seules des instructions provenant du bus domotique peuvent être prises en compte. Dans le deuxième mode 102, associé à un fonctionnement manuel, seules des actions locales sur l'appareil de contrôle 1, au moyen de boutons poussoirs, télécommande dédiée ou autre, peuvent être prises en compte.

Lorsque le premier mode 101 est en cours, et que l'appareil de contrôle 1 n'est pas sollicité pendant une période de temps prédéfinie, l'unité de traitement 4 est mise en veille. Si, au cours d'une période de temps prédéfinie supplémentaire, l'appareil de contrôle 1 n'est toujours pas sollicité, c'est le point de connexion 3 qui est mis en veille. A réception d'une information bus dédiée, le point de connexion 3 sera sorti de son état de veille, et il en sera de même de l'unité de traitement 4 en cas de détection de présence.

Bien entendu, l'invention n'est pas limitée au mode de réalisation décrit et représenté aux dessins annexés. Des modifications restent possibles, notamment du point de vue de la constitution des divers éléments, par combinaison différente des caractéristiques décrites ci-dessus, ou par substitution d'équivalents techniques, sans sortir pour autant du domaine de protection de l'invention.

## Revendications

1. Procédé de pilotage (100) d'un appareil de contrôle (1) domotique, communicant avec un réseau (2) d'information bus grâce à un point de connexion (3) qu'il comprend, présentant à son tour des sorties qu'il contrôle et piloté en fonction de signaux d'entrée
ledit appareil de contrôle (1) comprenant une unité de traitement (4) ainsi qu'un ensemble d'indicateurs visuels associés chacun à un paramètre de fonctionnement de l'appareil de contrôle (1), à savoir à un signal d'entrée ou à une sortie, et dont l'aspect est associé à un état de ce paramètre,
la mise en marche de chaque indicateur correspondant à un état prédéfini du paramètre associé,
procédé **caractérisé en ce que**
il comprend un premier mode (101), dans lequel les états des indicateurs visuels sont contrôlés de sorte qu'un indicateur visuel n'est pas mis en marche en permanence sur toute la période lors de laquelle l'état prédéfini se manifeste pour le paramètre associé.

2. Procédé selon la revendication 1, **caractérisé en ce que**
dans le premier mode (101), l'indicateur visuel est mis en marche, pendant un temps prédéfini uniquement après un changement de l'état du paramètre associé audit indicateur.

3. Procédé selon la revendication 2, **caractérisé en ce que**
le temps prédéfini pour la mise en marche d'un indicateur après le changement d'état du paramètre correspondant est réglable.

4. Procédé selon l'une quelconque des revendications 1 à 3, **caractérisé en ce que**
dans le premier mode (101), un indicateur visuel n'est pas mis en marche, indépendamment de l'état du paramètre associé.

5. Procédé selon l'une quelconque des revendications 1 à 4, **caractérisé en ce que**
l'unité de traitement (4) est placée dans un mode de veille, puis, en cas de stimulation prédéfinie, est replacée dans son mode de fonctionnement normal.

6. Procédé selon l'une quelconque des revendications 1 à 5, **caractérisé en ce que**
le point de connexion (3) est placé dans un mode de veille, puis, en cas de stimulation prédéfinie, replacé dans un mode de fonctionnement normal.

7. Procédé selon la revendication 6, **caractérisé en ce que**
le point de connexion (3) est replacé dans son mode de fonctionnement normal en cas d'information circulant dans le réseau (2) d'information.

8. Procédé selon l'une quelconque des revendications 1 à 7, **caractérisé en ce que**
il comprend, en outre, un deuxième mode (102), dans lequel un indicateur est mis en marche en permanence sur toute la période lors de laquelle l'état prédéfini se manifeste pour le paramètre associé, l'état des sorties étant piloté par une action locale de l'utilisateur sur l'appareil de contrôle (1) et/ou par une information circulant sur le réseau (2) d'information.

9. Procédé selon la revendication 8, **caractérisé en ce que**
le procédé peut commuter du premier mode (101) au deuxième mode (102) et inversement.

10. Procédé selon l'une quelconque des revendications 8 ou 9, **caractérisé en ce que**
il comprend une étape consistant à afficher (103) le mode de fonctionnement en cours.
